(19) **Europäisches Patentamt**

**European Patent Office**

**Office européen des brevets**

(11) **EP 1 112 197 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.⁷: **B60M 1/20**

(21) Anmeldenummer: **99953609.7**

(86) Internationale Anmeldenummer:
**PCT/DE99/02678**

(22) Anmeldetag: **26.08.1999**

(87) Internationale Veröffentlichungsnummer:
**WO 00/013929 (16.03.2000 Gazette 2000/11)**

(54) **SCHWENKAUSLEGER FÜR KETTENWERK-OBERLEITUNGSANLAGEN**

HINGED CANTILEVER FOR CATENARY-TYPE OVERHEAD LINE SYSTEMS

BRAS PIVOTANT POUR SYSTEME DE SUSPENSION CATENAIRE DE CABLES AERIENS

(84) Benannte Vertragsstaaten:
**AT BE CH CY DE DK ES FI FR GB GR IE IT LI LU MC NL PT SE**

(30) Priorität: **09.09.1998 DE 19841218**

(43) Veröffentlichungstag der Anmeldung:
**04.07.2001 Patentblatt 2001/27**

(73) Patentinhaber: **SIEMENS AKTIENGESELLSCHAFT**
**80333 München (DE)**

(72) Erfinder: **UNGVARI, Stefan**
**D-91356 Kirchehrenbach (DE)**

(56) Entgegenhaltungen:
**EP-A- 0 820 895      DE-C- 814 747**

• **PATENT ABSTRACTS OF JAPAN vol. 7, no. 31 (M-192), 8. Februar 1983 (1983-02-08) & JP 57 186531 A (SANWA TETSUKI KK), 17. November 1982 (1982-11-17)**

**Beschreibung**

Die Erfindung betrifft einen Schwenkausleger für Kettenwerk-Oberleitungsanlagen entsprechend dem Oberbegriff des Patentanspruches 1.

Schwenkausleger für Kettenwerk-Oberleitungsanlagen haben die Aufgabe, den Fahrdraht und das Tragseil für den Fahrdraht zu tragen, sowie den Fahrdraht und das Tragseil in einer vorgegebenen Lage entsprechend der Gleisführung zu halten. Die Schwenkausleger sind in der Regel dreh- und schwenkbar an den Tragelementen (Masten) gelagert, damit sie bei Temperaturschwankungen eventuellen Wanderungen des Kettenwerkes folgen können.

Schwenkausleger bekannter Bauart umfassen einen an einem Tragelement, z.B. Mast, angelenkten Spitzenstab, der mit einem unterhalb des Anlenkpunktes angelenkten Auslegerstab einen Dreigelenkrahmen bildet. An den Auslegerstab ist ein Stützstab und an diesen wiederum ein Seitenhalter angekoppelt. Der Seitenhalter hält die Fahrdrahtklemme und damit den Fahrdraht in der vorgegebenen Seitenlage. Bei schweren Kettenwerken ist zur Erhöhung der Tragfähigkeit zusätzlich ein Diagonalstab eingebaut, der den Spitzenstab in der Nähe des Anlenkpunktes am Tragelement mit dem Auslegerstab verbindet. An den durch Spitzenstab und Auslegerstab gebildeten Knoten ist eine Tragseilklemme, welche das Tragseil hält, befestigt. Der Fahrdraht hängt über vertikale Seile am Tragseil und bildet mit diesem das Kettenwerk. Das Gesamtgewicht des Kettenwerkes wird dabei von der Tragseilklemme aufgenommen.

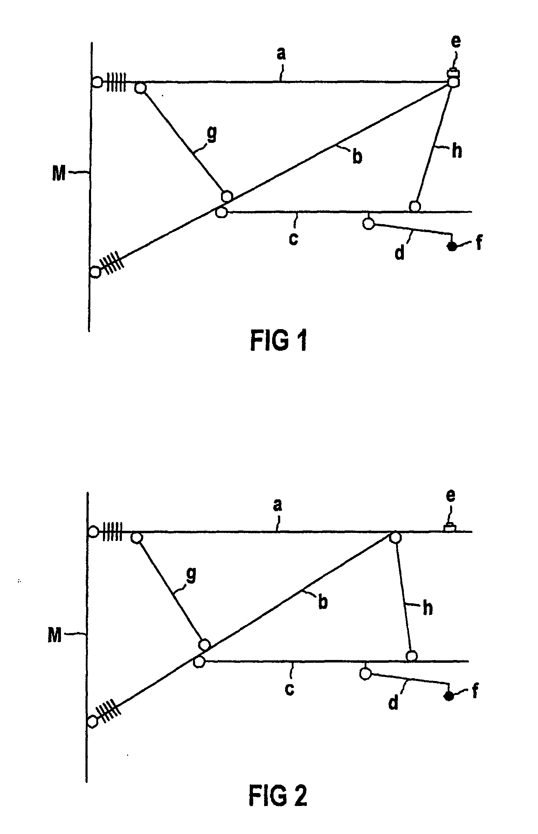

Die Figur 1 der Zeichnung zeigt in einer schematischen Darstellung eine solche Ausführung nach dem Stand der Technik.

Bei einer Variante zu der in Figur 1 dargestellten Ausführung ist der Spitzenstab so ausgeführt, daß er einen Kragarm bildet, an dem die Tragseilklemme entlang verschoben werden kann. Eine solche Variante ist in Figur 2 wiedergegeben. In beiden Varianten bedeuten:

    a - Spitzenstab      f - Fahrdrahtklemme
    b - Auslegerstab    g - Diagonalstab
    c - Stützstab      h - Stützstabhänger
    d - Seitenhalter    M - Tragelement (Mast)
    e - Tragseilklemme

In der DE 737 918 werden zwei Versionen eines Auslegers ohne Diagonalstab beschrieben. Bei beiden ist der Auslegerstab an seinem freien Ende abgewinkelt ausgeführt und bildet einen Kragarm, an dem eine das Tragseil aufnehmende Klemme angeordnet ist. Bei der einen Version ist die Aufhängung so beschaffen, daß der seitliche Fahrdrahtzug vom Mast weg gerichtet ist, so daß die am Fahrdrahthalter angreifenden Kräfte vom Mast weg gerichtet wirken. Bei der anderen Version wirkt der Seitenzug zum Mast hin, so daß die am Fahrdrahthalter angreifenden Kräfte zum Mast hin gerichtet sind.

Über die Ausführung und Geometrie der Anlenkpunkte von Auslegerstab und Spitzenstab ist nichts ausgesagt; aus den Abbildungen ist vielmehr zu entnehmen, daß Auslegerstab und Spitzenstab nicht schwenkbar sondern fest am Mast befestigt sind und daß der mit dem oben genanten Spitzenstab vergleichbare, in der Patentschrift nicht näher bezeichnete Stab auf Druck und Zug belastbar sein muß.

In der US-PS 1 653 855 wird ebenfalls ein nicht schwenkbarer Ausleger mit einem am freien Ende abgewinkelten Kragarm beschrieben. Da der Seitenhalter hier keine Druck- sondern nur Zugkräfte aufnehmen kann, wirken bei dieser Konstruktion die am Seitenhalter angreifenden Kräfte stets vom Mast weg gerichtet.

Aufgabe der Erfindung ist es, einen Schwenkausleger für Kettenwerk-Oberleitungsanlagen bei dem die Seitenhalterkräfte zum Tragelement (Mast) hin gerichtet sind anzugeben, der hinsichtlich Material-, Herstellungs- und Montageaufwand kostengünstiger gestaltet werden kann als bisherige solche Schwenkausleger.

Die gestellte Aufgabe wird durch die im Patentanspruch 1 angegebenen Merkmale gelöst.

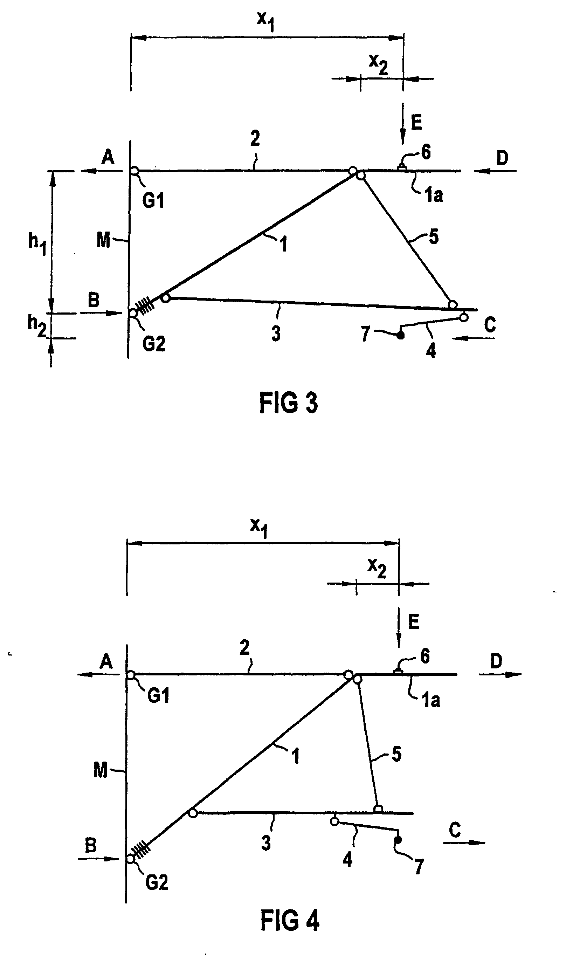

Anhand der Figur 3 wird eine Ausführung des erfindungsgemäßen Schwenkauslegers näher beschrieben. Die Figur 4 zeigt eine Anwendung der erfindungsgemäßen Lehre bei einem Schwenkausleger nach dem Stand der Technik, bei dem die Seitenhalterzugkraft vom Mast weg gerichtet ist.

Die Fig. 3 zeigt einen Schwenkausleger mit umgelenktem Stützpunkt, bei dem die Seitenhalterzugkraft C zum Mast M hin gerichtet ist. Hier wird zwar, wie bisher, der Schwenkausleger im wesentlichen durch ein Dreigelenk gebildet; der Auslegerstab 1 ist jedoch in Höhe der Tragseilklemme 6 abgewinkelt und hinter dem Anschlußgelenk des Spitzenstabes als Kragarm 1a weitergeführt. Die Tragseilklemme 6 ist auf dem Kragarm 1a im Abstand $x_2$ vom Umlenkpunkt angeordnet und kann dort beliebig verschoben werden. Der Spitzenstab ist erfindungsgemäß als Spitzenanker 2 in Seil- oder Zugstabausführung ausgebildet. Für einen Schwenkausleger mit angelenktem Stützpunkt (Fig. 4), bei dem die Seitenhalterzugkraft C vom Mast M weg gerichtet ist, ist die oben erwähnte Spitzenankerausführung an sich grundsätzlich möglich, weil hierbei immer Zugkräfte im Spitzenstab auftreten. Bei Ausführungen mit umgelenktem Schwenkausleger, wie in Fig. 3 dargestellt, sind solche statischen Gleichgewichtsbedingungen herzustellen, daß im Spitzenstab keine Druckkräfte, wie bisher, auftreten. Unter Bezugnahme auf Figur 3 ist hierzu folgende Gleichgewichtsbedingung gegeben:

$$h_1 \cdot A + h_1 \cdot D - h_2 \cdot C - X_1 \cdot E = 0$$

Daraus folgt die Beziehung:

$$A = \frac{h_2 \cdot C + X_1 \cdot E - h_1 \cdot D}{h_1}$$

Das Einhalten dieser Gleichgewichtsbedingung mit der Maßgabe, daß A ≥ 0 ist, kann in der Praxis insbesondere durch Anpassung der Anbauhöhe $h_1$ erfolgen. Da bei Einhaltung dieser Bedingung ausschließlich Zugkräfte auftreten, ist die Verwendung eines Seiles oder eines vergleichsweise schlanken Zugstabes als Spitzenanker leicht möglich. Somit ist ein knicksteifer Spitzenstab, wie bisher, nicht mehr notwendig.

Bei angelenktem Ausleger, wie in Figur 4 dargestellt, ist in der Regel in jedem Fall die Anwendung eines Seiles oder Zugstabes anstelle eines knicksteifen Spitzenstabes möglich, da hier an der Anlenkstelle G1 des Spitzenankers 2 am Tragelement nur Zugkräfte auftreten.

In Figuren 3 und 4 der Zeichnung bedeuten:

A - horizontale Auflagerkraft am Gelenk G1
B - horizontale Auflagerkraft am Gelenk G2
C - resultierende Kraft aus Windlast und Umlenkung des Fahrdrahtes
D - resultierende Kraft aus Windlast und Umlenkung des Tragseiles
E - Kraft aus Kettenwerkslast

1 - abgewinkelter Auslegerstab
2 - Spitzenanker
3 - Stützstab
4 - Seitenhalter
5 - Stützstabhänger
6 - Tragseilaufhängepunkt
7 - Fahrdrahtklemme

Die Vorteile des erfindungsgemäßen Schwenkauslegers sind im wesentlichen Kostensenkungen durch Reduzierung von Material-, Herstellungs- und Montageaufwand.

Während nach bisherigem Aufbau der Schwenkausleger nach Aufmaß der Istlage des eingebauten Mastes individuell gefertigt werden muß, um Abweichungen von der Soll-Lage des Mastes auszugleichen, kann der erfindungsgemäße Schwenkausleger auf Grundlage des Sollmaßes, also schon vor der Mastmontage, fabrikmäßig vorgefertigt werden. Das vorzuhaltende Sortiment an erforderlichen Auslegergrößen kann so deutlich reduziert werden.

Ein weiterer Vorteil ist darin zu sehen, daß eine Regulierung des Tragseiles in die exakte Soll-Lage nach Anbau des vorgefertigten Schwenkauslegers durch Verschieben der Tragseilklemme auf dem Kragarm des Auslegerstabes erfolgen kann.

Wie bereits angesprochen, kann der Spitzenanker 2, nachdem er keine Druck- und/oder Biegekräfte aufnehmen muß, sehr kostengünstig als einfache Seilkonstruktion oder Zugstab ausgeführt sein. Zur Erzielung einer elektrischen Isolation kann der Einsatz von Kunststoffen für das Seil bzw. den Zugstab zweckmäßig sein. Darüber hinaus kann der nach dem Stand der Technik aus statischen Gründen notwendige Diagonalstab (g in Fig. 1/2) bei dem erfindungsgemäßen Schwenkausleger entfallen.

**Patentansprüche**

1. Als Dreigelenk ausgeführter Schwenkausleger für Kettenwerk-Oberleitungsanlagen, mit einem an einem Tragelement (M) angelenkten Spitzenanker (2), an dessen freiem Ende ein Auslegerstab (1) angelenkt ist, der unter Bildung eines Dreigelenks unterhalb des Anlenkpunktes (G1) des Spitzenankers am Tragelement (M) angelenkt ist und der an seinem freien Ende abgewinkelt ist und einen Kragarm (1a) bildet, an dem eine das Tragseil aufnehmende Tragseilklemme (6 )verschiebbar angeordnet ist, und mit einem am Auslegerstab (1) angelenkten Stützstab (3), der von einem am Auslegerstab angelenkten Hänger (5) abgestützt wird und der einen Seitenhalter (4) mit einer Fahrdrahtklemme (7) trägt, **dadurch gekennzeichnet, daß** bei einem Schwenkausleger mit zum Tragelement (M) hin gerichteten Seitenhalterkräften (C) die Geometrie der Anlenkpunkte (G1 und G2) von Spitzenanker (2) und Auslegerstab (1) am Tragelement (M) im Verhältnis zu den Auflagerkräften (A, B) und den angreifenden Lasten (C, D, E) so gewählt ist, daß aus den Gleichgewichtsbedingungen folgend die horizontale Auflagerkraft (A) am Anlenkpunkt (G1) des Spitzenankers (2) am Tragelement (M) gleich oder größer Null ist.

**Claims**

1. Cantilever designed as a three-hinge unit for catenary-type overhead line systems with hinged to a carrier element (M) a pointed anchor (2), at the free end of which is hinged a cantilever rod (1) which is hinged forming a three-hinge unit below the link point (G1) of the pointed anchor on the carrier element (M) and which is angled at its free end and forms a jib (1a) on which is movably arranged a bearer cable clamp (6) holding the bearer cable, and with a support rod (3) hinged on the cantilever rod (1) and supported by a hanger (5) mounted on the cantilever rod and which carries a steady brace (4) with a contact wire clamp (7), **characterised in that** in a cantilever with steady brace forces (C) directed towards the carrier element (M), the geometry of the link points (G1 and G2) of the pointed anchor (2) and cantilever rod (1) on the carrier element (M) are selected in relation to the bearing forces (A, B) and the loads applied (C, D, E) so that from the equilibrium conditions the horizontal bearing force (A) on the link point (G1) of the pointed anchor (2) on the carrier element (M) is equal to or greater than zero.

**Revendications**

1. Bras pivotant réalisé sous forme de triangle articulé pour systèmes de suspension caténaire de câbles aériens, comportant un tirant (2) supérieur qui est articulé sur un élément (M) porteur et à l'extrémité libre duquel est articulée une barre (1) en porte-à-faux, qui est articulée sur l'élément (M) porteur en dessous du point (G1) d'articulation du tirant supérieur, formant un triangle articulé, et qui est coudée à son extrémité libre et forme un bras (1a) en saillie sur lequel est disposée à translation une pince (6) de câble porteur recevant le câble porteur, et comportant une barre (3) de soutien, qui est articulée sur la barre (1) en porte-à-faux, est soutenue par un pendule (5) articulé sur la barre en porte-à-faux et porte un antibalançant (4) pourvu d'une pince (7) de fil de contact, **caractérisé en ce que**, pour un bras pivotant avec des forces (C) d'antibalançant dirigées vers l'élément (M) porteur, la géométrie des points (G1 et G2) d'articulation sur l'élément (M) porteur du tirant (2) supérieur et de la barre (1) en porte-à-faux est, par rapport aux forces (A,B) d'appui et aux charges (C,D,E) agissantes, choisie de telle sorte que, suivant les conditions d'équilibre, la force (A) d'appui horizontale au point (G1) d'articulation du tirant (2) supérieur sur l'élément (M) porteur est supérieure ou égale à zéro.

FIG 1

FIG 2

FIG 3

FIG 4